# EUROPÄISCHE PATENTSCHRIFT

(11) **EP 2 168 750 B1**
(45) Veröffentlichungstag und Bekanntmachung des Hinweises auf die Patenterteilung: **02.01.2013**
(21) Anmeldenummer: 09011751.6
(22) Anmeldetag: 15.09.2009
(51) Int. Cl.: B29C 45/14

(54) **Verfahren zum Herstellen eines Spritzgießteils mit einem darin eingebetteten Befestigungseinsatz**
Method for producing an injection moulded part with an embedded fixing insert
Procédé de fabrication d'une pièce de moulage par injection dotée d'une garniture de fixation installée dedans

(30) Priorität: 27.09.2008 DE 102008049393
(43) Veröffentlichungstag der Anmeldung: 31.03.2010
(73) Patentinhaber: Intier Automotive Eybl Interiors GmbH, 94315 Straubing (DE)
(72) Erfinder: Rudolph, Nicole, 91154 Roth (DE)
(74) Vertreter: Völger, Silke Beatrix

(56) Entgegenhaltungen:
- EP-A- 1 918 589
- DE-C- 741 015
- DE-U- 7 440 446
- JP-A- 2 150 321
- JP-A- 61 100 424
- JP-A- 62 146 609
- JP-A- 2001 047 464
- JP-U- 62 173 912
- US-A- 2 017 216
- US-A- 3 045 290
- US-A- 4 443 173
- US-A1- 2005 166 317
- US-A1- 2005 218 558
- US-A1- 2007 026 744

## Beschreibung

Die vorliegende Erfindung betrifft ein Verfahren zum Herstellen eines Spritzgießteils mit einem darin eingebetteten Befestigungseinsatz.

Stand der Technik bilden dies bezüglich die Dokumente DE 7440446U, JP 62146689, JP 62173912U US 20050218558 und US 20070026744.

Derartige Spritzgießteile werden häufig im Kraftfahrzeuginnenraum für Innenverkleidungsteile beispielsweise für die Instrumententafel eingesetzt. Der Befestigungseinsatz kann dabei zur Befestigung eines Airbagmoduls Im nicht sichtbaren Bereich der Instrumententafel dienen. Die im Kraftfahrzeug eingebaute Instrumententafel besteht üblicherweise aus dem förmsteifen Strukturteil, einer das Strukturteil sichtseitig zum Innenraum überdeckenden Dekorschicht und einem zwischen Dekorschicht und Strukturteil liegenden geschäumten Zwischenschicht.

Aus der DE 101 60185 A1 ist ein Verfahren zum Erzeugen einer Befestigungsstruktur für ein Airbagmodul und Innenverkleidungsteilträger bekannt. Bei diesem bekannten Verfahren wird ein Rahmen durch Ummantelung und Verbinden von mit einem Gewinde versehenen Befestigungsbuchsen aus einem thermoplastischen Material erzeugt. Der Rahmen wird anschließend in einem Spritzgießwerkzeug positioniert und zur Herstellung eines Innenverkleidungsteils umspritzt. Um ein Eindringen des thermoplastischen Materials in die Gewindebohrungen der Befestigungsbuchsen zu verhindern, werden diese bei dem Einbettungsvorgang des Rahmens mit Kunststoffstopfen verschlossen. Bei diesem bekannten Verfahren zum Erzeugen einer Befestigungsstruktur können auf der den Befestigungsbuchsen gegenüberliegenden Oberflächen des Innenverkleidungsträgers Einfallstellen auftreten. Hierdurch wird die Optik der Oberfläche in diesen den Befestigungsbuchsen gegenüberliegenden Abschnitten der Oberfläche stark beeinträchtigt.

Aufgabe der vorliegenden Erfindung ist es daher, ein Verfahren zum Herstellen eines Spritzgießteils mit einem darin eingebetteten Befestigungseinsatz bereitzustellen, bei dem der dem Befestigungseinsatz gegenüberliegende Oberflächenabschnitt (X) des Spritzgießteils optisch einwandfrei ausgestaltet ist.

Diese Aufgabe wird dabei durch die im Anspruch 1 angegebenen Merkmale gelöst. In dem Befestigungseinsatz wird dabei eine Durchgangsbohrung vorgesehen, durch die ein Stift während des Befüllens der Kavität und des Aushärtens des Werkstoffs hindurch ragt. Hierdurch kann das Spritzgießteil auch im Bereich des eingebetteten Befestigungseinsatzes mit im Wesentlichen gleichmäßiger Wandstärke ausgestaltet werden, wobei dicke Querschnittsbereiche vermieden werden können. Dies wirkt unter anderem der Bildung von Lunkem und Einfalletellen entgegen.

Weitere vorteilhafte Ausgestaltungen und Weiterbildungen des erfindungsgemäßen Verfahrens ergeben sich aus den Unteransprüchen.

Eine bevorzugte Ausführungsform des erfindungsgemäßen Verfahrens zum Herstellen eines Spritzgießteils mit einem darin eingebetteten Befestigungseinsatz wird nachfolgend beispielshalber beschrieben, wobei veranschaulichend auf die beigefügten Zeichnungen Bezug genommen wird.

Es zeigt:
Fig.1 einen Ausschnitt einer Werkzeugform zum Spritzgießen eines Strukturteils mit einem in der Werkzeugform positionierten Befestigungseinsatz und einem in einer Durchgangsbohrung des Befestigungseinsatzes positionierten Stift im Querschnitt, und
Fig. 2 einen Ausschnitt eines Strukturteils einer Instrumententafel als Spritzgießteil mit einer darin eingebetteten Gewindebuchse im Querschnitt.

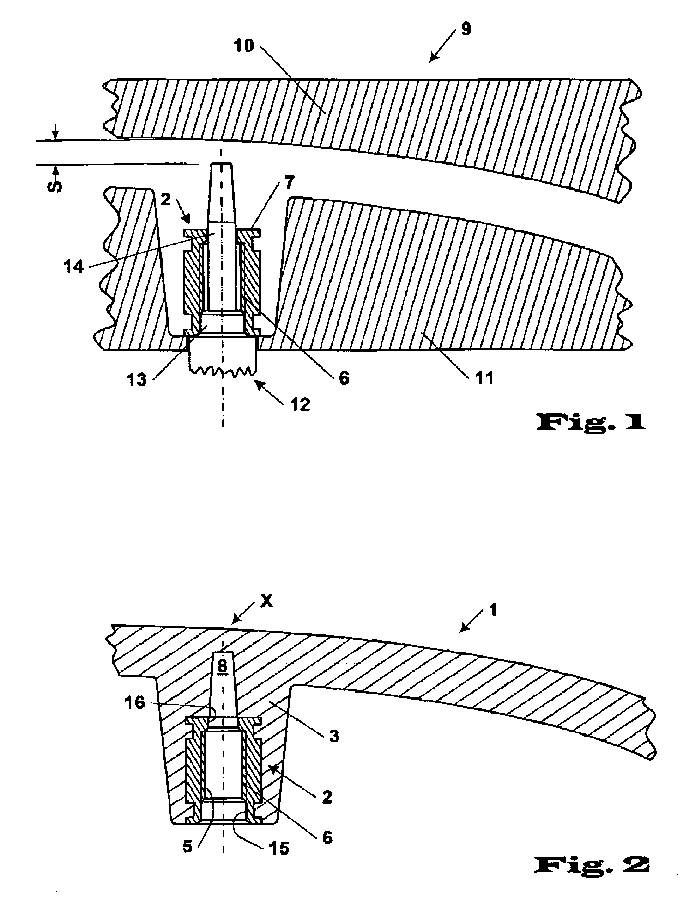

Fig. 2 zeigt ein nach dem erfindungsgemäßen Verfahren hergestelltes Strukturteil als Spritzgießteil 1 mit eingebettetem Befestigungseinsatz 2. Das dargestellte Spritzgießteil 1 ist beispielsweise ein Strukturteil der Instrumententafel eines Kraftfahrzeugs. An der Instrumententafel kann beifahrerseitig an den eingebetteten Befestigungseinsätzen 2 vom Innenraum des Kraftfahrzeugs unsichtbar ein Airbagmodul angeordnet werden. Die Befestigung des Airbagmoduls an dem Strukturteil muss dabei sicher und beständig sein. Eine derartige Befestigung kann dabei über Befestigungsschrauben erfolgen, wobei das Airbagmodul mittels Schrauben an die Befestigungseinsätze 2 angeschraubt wird. Zelchnerisch dargestellt ist eine Befestigungsstelle mit in dem Spritzgießteil 1 eingebettetem Befestigungseinsatz 2.

Das in der Figur 2 im Querschnitt dargestellte Strukturteil ist in dem dargestellten Ausführungsbeispiel als gleichmäßig leicht gewölbtes plattenförmiges Element ausgebildet. Auf der im späteren Einbauzustand rückseitigen vom Innenraum des Kraftfahrzeugs nicht sichtbaren Seite sind an dem Strukturteil abstehende Ansätze 3 angeformt, die konisch ausgeführt sind. In jedem Ansatz 3 ist jeweils ein Befestigungseinsatz 2 eingebettet, der in dem dargestellten Ausführungsbeispiel als Gewindebuchse ausgeführt ist. Die Gewindebuchse ist aus einem metallischen Werkstoff ausgeführt, es können allerdings auch andere Werkstoffe eingesetzt werden. Über die Befestigungseinsätze 2 können an dem Strukturteil Bauteile, Module etc. befestigt werden. Das Strukturteil kann weiterhin mittels der Befestigungseinsätze 2 und geeigneten Befestigungsmitteln an der Fahrzeugstruktur bzw. an mit der Fahrzeugstruktur verbundenen Bauteilen fixiert werden.

Aus der Darstellung in der Figur 2 ist weiterhin ersichtlich, dass die Gewindebuchse eine Durchgangsbohrung 5 aufweist. Der Querschnitt der Durchgangsbohrung 5 liegt innerhalb der lichten Weite des Kerndurchmessers des Gewindeabschnitts 6. Die Durchgangsbohrung 5 ist durch die der Befestigungsstelle gegenüberliegende Stirnseite 7 der Gewindebuchse durchgeführt und bildet in diesem ersten endseitigen Bereich der Gewindebuchse eine Dichtfläche 16. In dem der Befestigungsstelle zugewandten Endbereich der Gewindebuchse ist ebenfalls eine Dichtfläche 15 vorgesehen, die durch eine zylindrische Bohrung mit einem gegenüber der Durchgangsbohrung größeren Durchmesser gebildet wird. Die Durchgangsbohrung 5 mündet an dem ersten endseitigen Bereich 7 in einer Sacklochbohrung 8 im Spritzgusstell 1. Die Sacklochbohrung ist lelcht konisch ausgeführt. Des Weiteren gezeigt ist der der Befestigungsbuchse gegenüberliegende Oberflächenabschnitt X. Das entformte Spritzgussteil 1 weist an dem Oberflächenabschnitt X keine Einfallstelle auf.

Bei dem erfindungsgemäßen Verfahren zum Herstellen eines Spritzgießteils 1 beispielsweise eines Strukturteils einer Instrumententafel mit einem darin eingebetteten Befestigungseinsatz 2. wird in einem ersten Schritt der Befestigungseinsatz 2 innerhalb der Kavität eines aus einer oberen und einer unteren Werkzeughälfte 10,11 bestehenden Formwerkzeugs 9 auf einer Halteelnrichtung ausgerichtet. Der Befestigungseinsatz 2 ist als zylindrische Hülse mit Innengewinde ausgebildet und weist eine Durchgangsbohrung 5 auf. Die Durchgangsbohrung 5 kann zylindrisch oder leicht kegelig ausgebildet sein. Des Weiteren weist der Befestigungseinsatz 2 endseitig angeordnete zylindrische Dichtflächen 15, 16 auf. In der Durchgangsbohrung 5 ist, wie es in der Figur 2 dargestellt ist, mittig ein zylindrischer Stift 12 positioniert, der durch die Durchgangsbohrung 5 durchgeführt wird und auf der der oberen Werkzeughälfte 10 des Formwerkzeugs 9 zugewandten Seite aus der Durchgangsbohrung 5 herausragt. Der aus der Durchgangsbohrung ragende Endabschnitt des Stifts 12 ist konisch ausgebildet. Der Stift weist zu den Dichtflächen 15, 16 des Befestigungseinsatzes 2 korrespondierende Oberflächenabschnitte auf, die im positionierten Zustand jeweils einen Dichtsitz 13,14 bilden. Durch die vorstehend beschriebene Anordnung und Ausbildung des Befestigungseinsatzes 2 und des Stiftes 12 wird eine endseltige Abdichtung erzielt, so dass ein Eindringen von Werkstoff beim Einfüllen in die Kavität verhindert wird. Vorzugsweise wird der Stift 12 derart positioniert, dass zwischen dem stirnseitigen Ende des Stifts 12 und der Wand der oberen Werkzeughälfte ein Spalt (S) von 1 - 5 mm verbleibt und zwischen Stift 12 und Durchgangsbohrung 5 ein Ringspalt mit einer Spaltbreite von 0,1 bis 0,4 mm gebildet wird.

In einem anschließenden Verfahrensschritt wird ein flüssiger aushärtbarer Werkstoff in die Kavität des Formwerkzeugs 9 eingefüllt. Vorzugsweise ist der Werkstoff ein thermoplastischer Werkstoff, insbesondere thermoplastischer Kunststoff.

Nach dem Aushärten des Werkstoffs wird der Stift 12 aus der Durchgangsbohrung 5 und das Spritzgießteil 1 aus dem Formwerkzeug 9 entnommen.

Wie in der Beschreibungseinteitung bereits erläutert, werden die zuvor beschriebenen Spritzgießteile häufig im Kraftfahrzeuginnenraum für Innenverkleidungsteile beispielsweise für die Instrumententafel eingesetzt, Weitere Innenverkleidungsteile sind auch Türverkleidungselemente, sowie alle Elemente, die zur Verkleidung des Innenraums des Kraftfahrzeugs an der Fahrzeugstruktur oder an mit der Fahrzeugstruktur verbundenen Elementen befestigt sind. Der Befestigungseinsatz dient bei dem zu der Figur 1 beschriebenen Innenverkleidungsteils zur Befestigung eines Airbagmoduls im nicht sichtbaren Bereich der Instrumententafel. Allerdings ist die Erfindung nicht auf eine derartige Anwendung beschränkt. Es können auch andere Module, Bauteile etc. an dem Befestigungseinsatz befestigt werden. Mittels des bzw. der Befestigungseinsätze können die Innenverkleidungsteile auch an der Fahrzeugstruktur oder an mit der Fahrzeugstruktur verbundenen Bauteilen fixiert werden.

## Patentansprüche

1. Verfahren zum Herstellen eines Spritzgießteils (1) mit einem darin eingebetteten Befestigungseinsatz (2), worin
a. der Befestigungseinsatz (2) innerhalb der Kavität eines Formwerkzeugs (9) auf einer Halteeinrichtung ausgerichtet wird.
b. ein flüssiger aushärtbarer Werkstoff in die Kavität des Formwerkzeugs (9) eingefüllt wird und
c. nach dem Aushärten des Werkstoffs das Spritzgießteil (1) aus dem Formwerkzeug (9) entnommen wird, und wobei
d. in dem Befestigungseinsatz (2) eine Durchgangsbohrung (5) vorgesehen wird, durch die ein Stift (12) während des Befüllens der Kavität und des Aushärtens des Werkstoffs hindurch ragt,
e. **dadurch gekennzeichnet, dass** zwischen einem Ende des Stifts (12) und der benachbarten Wand des Formwerkzeugs, insbesondere der oberen Werkzeughälfte (10) ein Spalt (S) von 1 - 5 mm verbleibt.

2. Verfahren zum Herstellen eines Spritzgießteils (1) nach Anspruch 1, wobei der Befestigungseinsatz (2) in einem abstehenden Ansatz (3) des Spritzgießteils (1) eingebettet ist.

3. Verfahren zum Herstellen eines Spritzgusstells (1) nach Anspruch 2, wobei der Ansatz (3) rückseitig von einem Abschnitt des Spritzgießteils (1) mit einer vorderen ebenen oder schwach gleichmäßig gekrümmten Oberfläche absteht.

4. Verfahren zum Herstellen eines Spritzgießteils (1) nach einem oder mehreren der vorangehenden Ansprüche, wobei der Befestigungseinsatz (2) eine Gewindebuchse ist.

5. Verfahren zum Herstellen eines Spritzgussteils (1) nach Anspruch 4, wobei der weiteste Querschnitt der Durchgangsbohrung (5) innerhalb der lichten Weite des Kemdurchmessers des Gewindeabschnitts (6) liegt.

6. Verfahren zum Herstellen eines Spritzgießteils (1) nach Anspruch 4 oder 5, wobei die Durchgangsbohrung (5) zylindrisch oder leicht kegelig ist.

7. Verfahren zum Herstellen eines Spritzgießteils (1) nach einem oder mehreren der vorangehenden Ansprüche, wobei der Befestigungseinsatz (2) endseitig Dichtflächen (15, 16) aufweist, die mit korrespondierenden als Dichtsitze (13, 14) ausgebildete Oberflächenabschnitte des positionierten Stiftes (12) zusammenwirken.

8. Verfahren zum Herstellen eines Spritzgießteils (1) nach einem oder mehreren der vorangehenden Ansprüche, wobei der Stift (12) in der Durchgangsbohrung (5) einen Spalt von 0,1 bis 0,4 mm bildet.

9. Verfahren zum Herstellen eines Spritzgießteils (1) nach einem oder mehreren der vorangehenden Ansprüche, wobei der Werkstoff ein thermoplastischer Werkstoff, insbesondere thermoplastischer Kunststoff ist.

10. Verfahren zum Herstellen eines Spritzgießteils (1) nach einem oder mehreren der vorangehenden Ansprüche, wobei das Spritzgießteil (1) ein Strukturteil für eine Instrumententafel in einem Kraftfahrzeug ist.

## Claims

1. Method for producing an injection-moulded part (1) with an embedded fixing insert (2), wherein
a. the fixing insert (2) is aligned within the cavity of a mould (9) on a holding device,
b. a liquid curable material is filled into the cavity of the mould (9) and
c. after the material has cured, the injection-moulded part (1) is removed from the mould (9), and wherein
d. a through-hole (5), through which a pin (12) projects during the filling of the cavity and the curing of the material, is provided in the fixing insert (2),
e. **characterized in that** a gap (S) of 1 - 5 mm remains between an end of the pin (12) and the adjacent wall of the mould, in particular of the upper mould half (10).

2. Method for producing an injection-moulded part (1) according to Claim 1, wherein the fixing insert (2) is embedded in a protruding attachment (3) of the injection-moulded part (1).

3. Method for producing an injection-moulded part (1) according to Claim 2, wherein the attachment (3) protrudes from the rear of a portion of the injection-moulded part (1) with a front surface that is planar or slightly curved uniformly.

4. Method for producing an injection-moulded part (1) according to one or more of the preceding claims, wherein the fixing insert (2) is a threaded bush.

5. Method for producing an injection-moulded part (1) according to Claim 4, wherein the widest cross section of the through-hole (5) lies within the clear width of the core diameter of the threaded portion (6).

6. Method for producing an injection-moulded part (1) according to Claim 4 or 5, wherein the through-hole (5) is cylindrical or slightly conical.

7. Method for producing an injection-moulded part (1) according to one or more of the preceding claims, wherein the fixing insert (2) has at the ends sealing surfaces (15, 16), which interact with corresponding surface portions of the positioned pin (12) that are formed as sealing seats (13, 14).

8. Method for producing an injection-moulded part (1) according to one or more of the preceding claims, wherein the pin (12) in the through-hole (5) forms a gap of 0.1 to 0.4 mm.

9. Method for producing an injection-moulded part (1) according to one or more of the preceding claims, wherein the material is a thermoplastic material, in particular a thermoplastic polymer.

10. Method for producing an injection-moulded part (1) according to one or more of the preceding claims, wherein the injection-moulded part (1) is a structural part for a dashboard in a motor vehicle.

## Revendications

1. Procédé de fabrication d'une pièce moulée par injection (1) comprenant un insert de fixation (2) noyé dans celle-ci,
a) l'insert de fixation (2) étant orienté à l'intérieur de la cavité d'un outil de moulage (9) vers un dispositif de retenue,
b) un matériau fluide durcissable étant versé dans la cavité de l'outil de moulage (9) et
c) après le durcissement du matériau, la pièce moulée par injection (1) étant retirée de l'outil de moulage (9) et
d) dans l'insert de fixation (2) étant prévu un orifice de passage (5) à travers lequel pénètre une goupille (12) pendant le remplissage de la cavité et le durcissement du matériau,
e) **caractérisé en ce qu'**entre une extrémité de la goupille (12) et la paroi adjacente de l'outil de moulage, en particulier la moitié supérieure de l'outil (10), subsiste une fente (S) de 1 à 5 mm.

2. Procédé de fabrication d'une pièce moulée par injection (1) selon la revendication 1, dans lequel l'insert de fixation (2) est noyé dans une partie saillante (3) de la pièce moulée par injection (1).

3. Procédé de fabrication d'une pièce moulée par injection (1) selon la revendication 2, dans lequel la partie saillante (3) fait saillie du côté arrière depuis une portion de la pièce moulée par injection (1) avec une surface avant plane ou de faible courbure régulière.

4. Procédé de fabrication d'une pièce moulée par injection (1) selon l'une quelconque ou plusieurs des revendications précédentes, dans lequel l'insert de fixation (2) est une douille filetée.

5. Procédé de fabrication d'une pièce moulée par injection (1) selon la revendication 4, dans lequel la section transversale la plus large de l'orifice de passage (5) se situe à l'intérieur de la largeur intérieure du diamètre de noyau de la portion filetée (6).

6. Procédé de fabrication d'une pièce moulée par injection (1) selon la revendication 4 ou 5, dans lequel l'orifice de passage (5) est cylindrique ou légèrement conique.

7. Procédé de fabrication d'une pièce moulée par injection (1) selon l'une quelconque ou plusieurs des revendications précédentes, dans lequel l'insert de fixation (2) présente, du côté de l'extrémité, des surfaces d'étanchéité (15, 16) qui coopèrent avec des portions de surface correspondantes de la goupille positionnée (12) réalisées sous forme de sièges d'étanchéité (13, 14).

8. Procédé de fabrication d'une pièce moulée par injection (1) selon l'une quelconque ou plusieurs des revendications précédentes, dans lequel la goupille (12) forme dans l'orifice de passage (5) une fente de 0,1 à 0,4 mm.

9. Procédé de fabrication d'une pièce moulée par injection (1) selon l'une quelconque ou plusieurs des revendications précédentes, dans lequel le matériau est un matériau thermoplastique, notamment un plastique thermoplastique.

10. Procédé de fabrication d'une pièce moulée par injection (1) selon l'une quelconque ou plusieurs des revendications précédentes, dans lequel la pièce moulée par injection (1) est une pièce structurelle pour un tableau de bord dans un véhicule automobile.
